# FASCICULE DE BREVET EUROPEEN

(11) **EP 2 800 465 B1**
(45) Date de publication et mention de la délivrance du brevet: **02.12.2026**
(21) Numéro de dépôt: 12816684.0
(22) Date de dépôt: 05.12.2012
(51) Int. Cl.: A01G 23/10

(54) **PROCEDE POUR FAVORISER L'EXSUDATION DE L'OLEORESINE ET COMPOSITION POUR METTRE EN OEUVRE CE PROCEDE**
VERFAHREN ZUR FÖRDERUNG DER EXSUDATION VON OLEORESIN UND ZUSAMMENSETZUNG ZUR DURCHFÜHRUNG DES VERFAHRENS
METHOD FOR PROMOTING THE EXUDATION OF OLEORESIN AND COMPOSITION FOR IMPLEMENTING SAID METHOD

(30) Priorité: 06.01.2012 FR 1200052
(43) Date de publication de la demande: 12.11.2014
(73) Titulaire: Holiste Laboratoires et Développement, 71110 Artaix (FR)
(72) Inventeur: LENEVEU, Luc, F-71110 Anzy Le Duc (FR)
(74) Mandataire: Boüan du Chef du Bos, Louis-Paterne
(86) Numéro de dépôt international: PCT/FR2012/000502
(87) Numéro de publication internationale: WO 2013/102706

(56) Documents cités:
- WO-A2-02/094002
- FR-A- 741 756
- FR-A1- 2 774 257
- GB-A- 2 156 827
- US-A- 3 858 354

## Description

La présente invention concerne les procédés pour favoriser la sécrétion de l'oléorésine contenue dans un arbre, et plus particulièrement l'oléorésine du pin maritime ou autres conifères.

La présente invention concerne aussi les compositions qui permettent de mettre en œuvre de tels procédés, c'est-à-dire les compositions pour favoriser l'exsudation de l'oléorésine de certains arbres.

On sait que les Romains exploitaient déjà l'oléorésine, notamment pour le calfatage des bateaux. La pratique connue la plus ancienne pour la récolte de l'oléorésine est celle connue sous la terminologie de "gemmage".

Pour récolter l'oléorésine, les gemmeurs pratiquaient une incision dans l'arbre appelée "care". De cette care coulait l'oléorésine qui était récoltée trois à quatre fois par an. Il fallait régulièrement reprendre l'incision, car l'arbre cicatrisait rapidement.

Cette méthode n'était pas vraiment optimale car l'oléorésine obtenue était en très faible quantité, contenait beaucoup d'impuretés et en outre perdait beaucoup, par évaporation, des essences qu'elle contient, essentiellement la térébenthine.

Or, la production de l'oléorésine est intéressante car elle permet la production de divers produits, comme par exemple la colophane, la térébenthine utilisée dans essentiellement quatre grands domaines, à savoir les produits d'entretien, les peintures et vernis, les produits de synthèse (caoutchouc, parfums, le brai, etc.), et l'industrie pharmaceutique pour différentes applications, aussi bien de soin que de bien-être.

Liées à la réduction, en quantité et qualité, des ressources disponibles de l'oléorésine dans le monde, des études ont été menées notamment en Europe visant à examiner différentes techniques permettant l'intensification de sa production.

Les efforts ont essentiellement porté sur les performances d'un gemmage dit « mécanisé », sur la minimisation des coûts de main d'oeuvre, etc., avec en outre des préoccupations de sauvegarde des écosystèmes, de protection de la santé des opérateurs, de préservation de la qualité des bois, de récupération d'essences terpéniques et de colophanes de haut degré de pureté, etc.

Les techniques de gemmage actuelles sont par exemple décrites et illustrées dans les FR-A-691361, FR-A-741756, FR-A-2746582 et EP-A-1052892., US-A-3858354, FR-A-2774257 et GB2156827.

C'est ainsi que des opérations de gemmage abandonnées depuis des années ont été relancées, notamment en France, en se basant pour certaines sur la technique de l'acide sulfurique.

En effet, pour améliorer la production de l'oléorésine, un perfectionnement apporté au procédé de gemmage consiste à pulvériser de l'acide sulfurique sur la care pour augmenter le rendement de la sécrétion. Selon ce procédé, le pin réagit à la blessure ainsi activée en produisant davantage d'oléorésine. Cette technique a été mise en œuvre jusqu'à la disparition presque totale du gemmage vers les années 1990, au moins en partie à cause des inconvénients de cette technique par l'acide sulfurique.

Les inconvénients de cette technique peuvent se résumer de la façon suivante :
Tout d'abord la perte, par écoulement le long du tronc de l'arbre, d'une quantité non négligeable de l'acide pulvérisé sur la care, d'où un gaspillage de cet acide.

Ensuite, la part d'acide qui s'écoule le long du tronc attaque l'arbre en profondeur, ce qui dégrade le tronc de l'arbre et le rend en partie inexploitable pour son utilisation en bois industriel, par exemple pour la fabrication de divers objet de manutention, comme des palettes, des caisses, etc.

En outre, cette partie d'acide s'écoulant le long du tronc peut atteindre le sol au pied de l'arbre, même jusqu'à ses racines, et contribuer ainsi à sa dégénérescence plus rapide, sans oublier la dégradation de la flore environnante.

Enfin, cet acide est très dangereux pour les techniciens qui l'utilisent, de même que toutes les personnes qui, pour différentes raisons, sont amenées à se déplacer dans les forêts de ces arbres.

La présente invention a donc pour but de mettre en œuvre un procédé pour favoriser la sécrétion de l'oléorésine apte à être produite par certains arbres, notamment les pins maritimes et autres conifères ou analogues, qui pallie en grande partie les inconvénients des procédés de gemmage de l'art antérieur tout en permettant un rendement de cette sécrétion encore plus élevé.

La présente invention a aussi pour but de réaliser une composition pour mettre en oeuvre le procédé selon l'invention.

Plus précisément, la présente invention a pour objet un procédé pour favoriser l'exsudation de l'oléorésine d'un arbre, tel que décrit dans la revendication 1.

Plus préférentiellement, une application sur la blessure, d'un acide hydroxylé choisi parmi des acides suivants: suivants: citrique, glycolique, lactique, glycérique, malique, tartrique, mandélique, ascorbique, salicylique, un mélange d'au moins deux de ceux-ci.

Très préférentiellement, l'acide hydroxylé est l'acide citrique.

La présente invention a aussi pour objet une composition pour favoriser l'exsudation de l'oléorésine d'un arbre, notamment d'un pin ou autre tel que décrit dans la revendication 8.

Selon une autre caractéristique de l'invention, la composition comporte en outre un support adsorbeur qui a adsorbé une quantité déterminée du dit activateur en phase liquide, ledit support adsorbeur ayant une structure lui permettant de retenir ledit activateur en phase liquide qu'il a adsorbé, un tel support adsorbeur étant préférentiellement choisi parmi les produits suivants : une argile, du talc, du gypse, de la silice, un mélange d'au moins deux de ceux-ci.

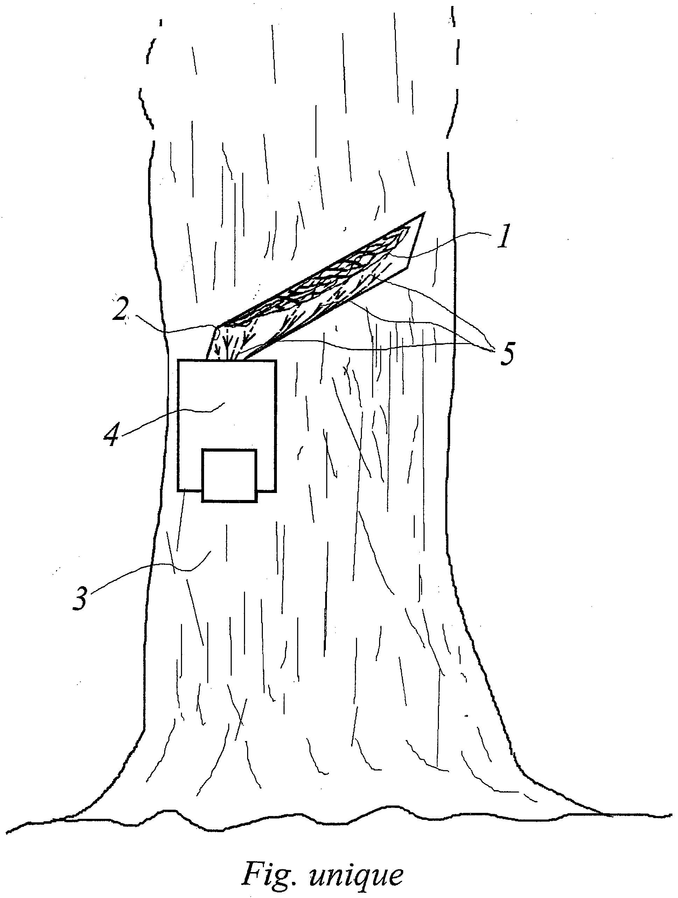

D'autres caractéristiques et avantages de la présente invention apparaîtront au cours de la description suivante donnée ci-après, en regard de la figure unique permettant d'expliciter un exemple de mise en oeuvre du procédé selon l'invention.

En référence à la figure unique, selon un mode de mise en oeuvre préféré, le procédé selon l'invention pour favoriser l'exsudation de l'oléorésine d'arbres, notamment de pins ou autres conifères, consiste à préparer, en phase liquide, un activateur de l'exsudation de l'oléorésine, puis à faire adsorber cet activateur en phase liquide par un support adsorbeur 1, ce support adsorbeur ayant une structure lui permettant de retenir cet activateur en phase liquide qu'il aura préalablement adsorbé, et ensuite à mettre en contact le support adsorbeur ayant adsorbé l'activateur en phase liquide avec une blessure superficielle ou care 2 infligée à un arbre 3, de façon que l'activateur en phase liquide reste au contact de la blessure, avantageusement sur toute la surface de cette blessure, et soit libéré par le support adsorbeur 1 au fur et à mesure de l'exsudation de l'oléorésine 5.

Il est précisé que la forme de la care 2 sur la figure unique n'est donnée qu'à titre illustratif et que la care peut présenter toute autre forme, par exemple circulaire ou analogue, et ce quels que soient les moyens qui ont été utilisés pour réaliser cette care.

Cette oléorésine peut alors être recueillie dans un pot 4 ou analogue, selon par exemple l'une des techniques décrites dans les documents cités au préambule de la présente description.

Selon une mise en œuvre préférentielle du procédé selon l'invention, l'activateur en phase liquide est obtenu en dissolvant, dans un solvant, un acide organique hydrosoluble choisi parmi les acides suivants: acétique, maléique-fumarique, oxalique, un acide hydroxylé, un de leurs sels, un de leurs dérivés, un mélange de ces acides, sels, dérivés.

Plus préférentiellement, l'acide hydroxylé est l'un des acides suivants : citrique, glycolique, lactique, glycérique, malique, tartrique, mandélique, ascorbique, salicylique, un mélange d'au moins deux de ceux-ci.

Encore plus préférentiellement, en raison du rendement observé par la Demanderesse lors d'essais de récolte d'oléorésine sur des pins notamment maritimes beaucoup plus élevé que celui obtenu avec l'acide sulfurique selon les procédés antérieurs, l'acide organique hydroxylé utilisé est l'acide citrique.

De façon avantageuse, le procédé consiste à utiliser de l'eau comme solvant.

De façon également préférentielle, pour rendre le procédé plus industriel, il peut être ajouté, à l'activateur en phase liquide, au moins l'un des agents suivants : un agent plastifiant, un agent gélifiant, un agent tensioactif, un agent tackifiant, un agent thixotrope.

Ces additifs sont intéressants à différents titres pour la mise en œuvre du procédé. Les agents plastifiants et/ou gélifiants sont des régulateurs de l'onctuosité de l'activateur. Ils sont par exemple constitués par de l'éthylène glycol, ses dérivés (di-éthylène glycol, tri-éthylène glycol, ..., polyoxyéthylènes) et homologues (propylène glycol, copolymères, ..., poloxamères). Quant aux agents tensio-actifs ou émulsifiants, ils sont destinés à assurer l'homogénéité de la composition et sa compatibilité avec le bois mis à nu au niveau des blessures ou cares. Ils sont par exemple des produits de synthèse courants ou produits d'origine naturelle, comme la cire d'abeille, la cire de ricin, des huiles végétales, par exemple de soja. Les agents tackifiants, par exemple la gemme elle-même ou la colophane, permettent d'assurer l'adhésion instantanée de l'activateur et du bois. Enfin, les agents thixotropes sont destinés à éviter tout écoulement par gravité de l'activateur en phase liquide. Ce sont des produits inorganiques, par exemple de la silice pyrogénée, et/ou organiques épaississants du type agar-agar, pectine, gommes naturelles diverses.

Selon une autre caractéristique de l'invention, le procédé consiste à utiliser, comme support adsorbeur, une charge solide. De façon tout à fait préférentielle et avantageuse, cette charge solide est choisie parmi les produits suivants : une argile, du talc, du gypse, de la silice, un mélange d'au moins deux de ceux-ci.

Quant à l'argile, elle est choisie avantageusement parmi la bentonite, le kaolin et leurs mélanges.

La présente invention a aussi pour objet une composition pour la mise en œuvre du procédé de façon à favoriser l'exsudation de l'oléorésine d'arbres, notamment de pins ou autres conifères, caractérisée en ce qu'elle comporte, comme activateur en phase liquide de l'exsudation de l'oléorésine, une solution d'un acide organique hydrosoluble choisi parmi les acides suivants : acétique, maléique-fumarique, oxalique, un acide hydroxylé, d'un de leurs sels, d'un de leurs dérivés, d'un mélange d'au moins deux de ces acides, sels, dérivés, ledit acide hydroxylé étant préférentiellement l'acide citrique.

Selon une autre caractéristique particulièrement préférentielle de l'invention, dans cette composition, l'acide hydroxylé est choisi parmi les acides suivants : citrique, glycolique, lactique, glycérique, malique, tartrique, mandélique, ascorbique, salicylique, un mélange d'au moins deux de ceux-ci.

Selon une autre caractéristique de l'invention, la composition comporte en outre un support adsorbeur qui a adsorbé une quantité déterminée de l'activateur en phase liquide, lequel support adsorbeur ayant une structure lui permettant de retenir l'activateur en phase liquide qu'il a adsorbé.

Un tel adsorbeur est préférentiellement choisi parmi les produits suivants : une argile, du talc, du gypse, de la silice, un mélange d'au moins deux de ceux-ci.

De façon encore plus préférentielle pour la réalisation de cette composition, l'acide hydroxylé est l'acide citrique et l'argile est choisie plutôt parmi les corps suivants : la bentonite, le kaolin et leurs mélanges.

La Demanderesse a obtenu de bons résultats avec une composition selon l'invention constituée d'un mélange activateur/argile dans lequel la proportion en poids est comprise entre 30% et 50% pour l'activateur, et entre 70% et 50% pour l'argile. La quantité de solvant, en l'occurrence de l'eau, est déterminée pour donner un mélange final se présentant sous la forme d'une pâte relativement onctueuse qui lui permet d'être facilement étalé sur la surface de la care.

Au cours de ses expérimentations, la Demanderesse a pu constater que l'application de la composition selon l'invention sur une care immédiatement après la réalisation de cette dernière entraînait la formation d'un film en superficie de la blessure. Tout en assurant la protection de cette blessure vis-à-vis de l'atmosphère environnante (oxygène de l'air notamment), ce film laisse s'écouler la gemme par une multitude de canaux microscopiques qui apparaissent très rapidement et subsistent jusqu'à la fin de l'écoulement de l'oléorésine.

Elle a constaté que l'activateur tel que défini ci-avant dans sa forme préférée avait une autre fonction avantageuse, à savoir une fonction de retardateur, de la cicatrisation de la blessure, par coalescence de la gemme en écoulement liée à l'évaporation d'une partie des huiles essentielles.

Il est en outre précisé que la récolte de la gemme peut se faire selon la technique connue dite « en vase clos ».

Dans sa forme actuellement la mieux aboutie, ce procédé selon l'invention, non seulement ne présente aucun des inconvénients présentés par les procédés antérieurs, mais aussi permet d'assurer des productivités moyennes d'au moins trois litres de gemme par pin, c'est-à-dire bien supérieures à celles permises par l'activation à l'acide sulfurique (ou ses dérivés).

## Revendications

1. Procédé pour favoriser l'exsudation de l'oléorésine d'un arbre, notamment d'un pin ou autre conifère, **caractérisé en ce qu'**il consiste en une application, sur une blessure superficielle infligée à l'arbre, d'une solution d'acide citrique ou de l'un de ses dérivés comme activateur de l'exsudation de l'oléorésine.

2. Procédé selon la revendication 1, **caractérisé par le fait qu'**il consiste en outre à :
• faire adsorber ledit activateur en phase liquide par un support adsorbeur, ledit support adsorbeur ayant une structure lui permettant de retenir ledit activateur en phase liquide qu'il aura préalablement adsorbé,
• mettre en contact ledit support adsorbeur ayant adsorbé ledit activateur en phase liquide avec la blessure superficielle infligée à l'arbre, de façon que l'activateur en phase liquide reste au contact de la blessure et soit libéré par ledit support adsorbeur au fur et à mesure de l'exsudation de l'oléorésine.

3. Procédé selon l'une des revendications 1 et 2, **caractérisé par le fait qu'**il consiste à utiliser de l'eau comme solvant pour obtenir ladite solution.

4. Procédé selon l'une des revendications 1 à 3, **caractérisé par le fait qu'**il consiste à ajouter, à l'activateur en phase liquide, au moins l'un des agents suivants : un agent plastifiant, un agent gélifiant, un agent tensioactif, un agent tackifiant, un agent thixotrope.

5. Procédé selon l'une des revendications précédentes quand elle dépend de la revendication 2, **caractérisé par le fait qu'**il consiste à utiliser, comme support adsorbeur, une charge solide.

6. Procédé selon la revendication 5, **caractérisé par le fait qu'**il consiste à utiliser, comme charge solide, une argile.

7. Procédé selon la revendication 6, **caractérisé par le fait que** ladite argile est choisie parmi la bentonite, le kaolin et leurs mélanges.

8. Composition pour favoriser l'exsudation de l'oléorésine d'un arbre, notamment d'un pin ou autre conifère, **caractérisée en ce qu'**elle comporte, comme activateur en phase liquide de l'exsudation de l'oléorésine, au moins une solution d'acide citrique ou de l'un de ses dérivés.

9. Composition selon la revendication 8, **caractérisée par le fait qu'**elle comporte en outre un support adsorbeur qui a adsorbé une quantité déterminée du dit activateur en phase liquide, ledit support adsorbeur ayant une structure lui permettant de retenir ledit activateur en phase liquide qu'il a adsorbé.

10. Composition selon la revendication 9, **caractérisée par le fait que** ledit support adsorbeur est une argile.

## Patentansprüche

1. Verfahren zum Fördern der Exsudation von Oleoresin aus einem Baum, insbesondere einer Kiefer oder einem anderen Nadelbaum,
**dadurch gekennzeichnet, dass** es aus einer Aufbringung einer Lösung aus Zitronensäure oder einem ihrer Derivate auf eine oberflächliche Wunde am Baum besteht, um die Exsudation von Oleoresin zu aktivieren.

2. Verfahren nach Anspruch 1, **dadurch gekennzeichnet, dass** es ferner darin besteht:
• den Aktivator in der flüssigen Phase durch einen Adsorptionsträger adsorbieren zu lassen, wobei der Adsorptionsträger eine Struktur aufweist, die es ihm ermöglicht, den zuvor adsorbierten Aktivator in der flüssigen Phase zurückzuhalten,
• den Adsorptionsträger, der den Aktivator in der flüssigen Phase adsorbiert hat, mit der dem Baum zugefügten oberflächlichen Wunde in Kontakt zu bringen, sodass der Aktivator in der flüssigen Phase mit der Wunde in Kontakt bleibt und durch den Adsorptionsträger bei der Exsudation des Oleoresins freigesetzt wird.

3. Verfahren nach einem der Ansprüche 1 und 2,
**dadurch gekennzeichnet, dass** es darin besteht, Wasser als Lösungsmittel zu verwenden, um die Lösung zu erhalten.

4. Verfahren nach einem der Ansprüche 1 bis 3,
**dadurch gekennzeichnet, dass** es darin besteht, dem Aktivator in der flüssigen Phase mindestens einen der folgenden Wirkstoffe hinzuzufügen: einen Weichmacher, ein Geliermittel, ein Tensid, ein Haftmittel, ein Thixotropiermittel.

5. Verfahren nach einem der vorstehenden Ansprüche in Abhängigkeit von Anspruch 2, **dadurch gekennzeichnet, dass** es darin besteht, als Adsorptionsmittel einen festen Füllstoff zu verwenden.

6. Verfahren nach Anspruch 5, **dadurch gekennzeichnet, dass** es darin besteht, Ton als festen Füllstoff zu verwenden.

7. Verfahren nach Anspruch 6, **dadurch gekennzeichnet, dass** der Ton aus Bentonit, Kaolin und Mischungen davon ausgewählt wird.

8. Zusammensetzung zur Förderung der Exsudation von Oleoresin aus einem Baum, insbesondere einer Kiefer oder einem anderen Nadelbaum, **dadurch gekennzeichnet, dass** sie als Aktivator in der flüssigen Phase der Oleoresinexsudation mindestens eine Lösung von Zitronensäure oder einem ihrer Derivate umfasst.

9. Zusammensetzung nach Anspruch 8, **dadurch gekennzeichnet, dass** sie ferner einen Adsorptionsträger umfasst, der eine bestimmte Menge des Aktivators in der flüssigen Phase adsorbiert hat, wobei der Adsorptionsträger eine Struktur aufweist, die es ihm ermöglicht, den zuvor adsorbierten Aktivator in der flüssigen Phase zurückzuhalten.

10. Zusammensetzung nach Anspruch 9, **dadurch gekennzeichnet, dass** es sich bei dem Adsorptionsträger um Ton handelt.

## Claims

1. Method for promoting oleoresin exudation from a tree, in particular a pine or other conifer, **characterized in that** it consists in applying, to a superficial wound inflicted on the tree, a solution of citric acid or a derivative thereof as an activator of oleoresin exudation.

2. Method according to claim 1, **characterized in that** it further consists in:
- adsorbing said liquid-phase activator by means of an adsorber support, said adsorber support having a structure enabling it to retain said liquid-phase activator which it will have previously adsorbed,
- bringing said adsorber support having adsorbed said liquid-phase activator into contact with the superficial wound inflicted on the tree, so that the liquid-phase activator remains in contact with the wound and is released by said adsorber support as the oleoresin exudes.

3. Method according to either of claims 1 or 2, **characterized in that** it consists in using water as a solvent to obtain said solution.

4. Method according to any of claims 1 to 3, **characterized in that** it consists in adding to the liquid-phase activator at least one of the following agents: a plasticizing agent, a gelling agent, a surface-active agent, a tackifying agent, a thixotropic agent.

5. Method according to any of the preceding claims when dependent on claim 2, **characterized in that** it consists in using a solid filler as the adsorber support.

6. Method according to claim 5, **characterized in that** it consists in using a clay as the solid filler.

7. Method according to claim 6, **characterized in that** said clay is selected from bentonite, kaolin and mixtures thereof.

8. Composition for promoting oleoresin exudation from a tree, in particular a pine or other conifer, **characterized in that** it comprises, as a liquid-phase activator of oleoresin exudation, at least one solution of citric acid or a derivative thereof.

9. Composition according to claim 8, **characterized in that** it further comprises an adsorber support which has adsorbed a determined quantity of said liquid-phase activator, said adsorber support having a structure enabling it to retain said liquid-phase activator which it has adsorbed.

10. Composition according to claim 9, **characterized in that** said adsorber support is a clay.
